# EUROPEAN PATENT SPECIFICATION

(11) **EP 2 488 350 B1**
(45) Date of publication and mention of the grant of the patent: **20.03.2019**
(21) Application number: 10763724.1
(22) Date of filing: 14.10.2010
(51) Int. Cl.: B29D 11/00, G02B 1/04, G02C 7/04

(54) **METHOD AND DEVICE FOR MAINTAINING A CONCENTRATION OF A TREATMENT BATH**
VERFAHREN UND VORRICHTUNG ZUR BEWAHRUNG EINER KONZENTRATION EINES BEHANDLUNGSBADES
PROCÉDÉ ET DISPOSITIF POUR ENTRETENIR LA CONCENTRATION D'UN BAIN DE TRAITEMENT

(30) Priority: 16.10.2009 US 252510 P
(43) Date of publication of application: 22.08.2012
(73) Proprietor: Novartis AG, 4056 Basel (CH)
(72) Inventor: BIEL, Roger, 63743 Aschaffenburg (DE); LORENZ, Katrin, Sylke, 64287 Darmstadt (DE)
(74) Representative: Bohest AG
(86) International application number: PCT/EP2010/065438
(87) International publication number: WO 2011/045382

(56) References cited:
- EP-A2- 0 453 231
- WO-A1-2005/113028
- WO-A2-2007/021612
- US-A1- 2003 222 362

## Description

### FIELD

The invention relates to a method for maintaining a concentration of a liquid treatment bath within a desired range. The invention also relates to a respective treatment station for contact lenses.

### BACKGROUND

WO 2007/021612 discloses method and production facility for extracting and soaking contact lenses having a plurality of inter-connected baths for immersing the lenses, wherein the quality of the employed liquid composition/material may be measured and can be changed by automatic monitoring and replenishment.

It is well established in the art to produce hard and soft contact lenses in an automated production process with reusable moulds. Depending on the material from which the contact lenses are made, and in accordance with the production method applied the contact lenses must be immersed in various liquids, for example extraction liquids or solutions, and/or rinsing liquids or solutions and/or coating liquids or solutions in order to obtain the desired product which may be worn in direct contact with the customer's eyes. During these process steps it must be ascertained that the entire contact lens is sufficiently wetted and treated with the respective liquid or solution and that the concentration of the treatment liquid or solution in the bath remains within a specified range in order to accomplish the desired tasks such as, e.g., extract substances from the lens material, coat the lens, etc. For example in extraction processes the extracted substances remain in the extraction liquid or solution. With every lens that is immersed in an extraction liquid more and more of the extracted substances enter the liquid bath. Over a period of time this may lead to a decreasing efficiency of the extraction process. In addition to this lingering contamination of the extraction liquid bath, dilution of the treatment liquid or treatment solution can become a problem. Prior to immersing the lenses in the extraction liquid they are generally rinsed in a water bath. The rinsing of the lenses in water prohibits or reduces soiling of the extraction liquid. However, together with every lens a small amount of the water is spread into the extraction liquid bath. The water is spread by transport containers, in which the lenses are accommodated, and by the surfaces of the lenses themselves. Thus, during the production of the lenses the concentration of the extraction liquid bath is constantly reduced.

When the concentration of an extraction liquid bath, or more generally, a treatment liquid bath falls below a critical value, the treatment liquid or treatment solution in the bath must be changed. The changing of the bath, however, stands in contrast to the object to maintain continuous production cycles. Any interruption has a direct negative effect on the achievable output and thus on the reliability of the production process. To make the volumes of the baths larger only delays the dilution and contamination problem and does not present an efficient solution. Even with larger volumes the baths will eventually have to be changed, which then may lead to an even longer interruption of the production process for the contact lenses.

It is to be noted that the dilution problem arises in any process in which the lenses are immersed in a treatment liquid, with the lenses being rinsed in water (or any liquid other than the treatment liquid) prior to their treatment in the liquid.

It is therefore an object of the present invention to provide a method for maintaining the concentration of a treatment liquid or treatment solution bath within a specified range, thereby avoiding an interruption of a continuous production process for contact lenses. The wording treatment "liquid" or treatment "solution" may be used interchangeably herein. Contamination and dilution of the liquid or solution bath shall be kept at a tolerable and low level, irrespective of the amount of lenses treated in the liquid bath. The method shall be compatible with the continuous production processes for contact lenses.

### SUMMARY

These and still further objects are met by a method for maintaining the concentration of a treatment liquid bath in the production process for contact lenses comprising the method steps that are listed in claim 1. The objects are also met by a treatment station for contact lenses which comprises the features listed in the respective independent device or treatment station claim. Further improvements of the invention and preferred embodiments are subject of the respective dependent claims.

In accordance with one embodiment of the present invention, a method for maintaining the concentration of a treatment liquid bath in the production process for contact lenses is disclosed. The method includes the process steps of rinsing each lens in a water bath immediately prior to immersing the lens in a treatment liquid bath in a treatment station, for example to treat the lenses by extraction and/or rinsing and/or coating thereof. Following the rinsing in the water bath each contact lens is immersed in an arrangement of two or more successive treatment liquid baths of the same kind. The treatment liquids in the successive baths are continuously renewed and are transported from one bath to the preceding bath in a direction which is opposite to a transport direction of the contact lenses from bath to bath. A metered volume of treatment liquid is continuously introduced into the last bath of the arrangement of treatment liquid baths in dependency of a measured concentration, and a specified volume of treatment liquid is continuously removed from the first bath.

By dividing a voluminous batch bath with treatment liquid into an arrangement of successive baths with the same kind of treatment liquid both problems, the lingering contamination and the dilution of the treatments liquid with rinsing water, are met. Surveys show, that already a transition from one large batch bath to an arrangement of two successive baths with treatment liquid reduces the problem of dilution of the treatment liquid bath considerably. The same effect occurs with possible contaminations, which are concentrated basically only in the first one of the arrangement of successive baths. The treatment liquid is being continuously renewed and flows from the last one of the arrangement of successive baths via any intermediate baths towards the first bath. Consequently a specific volume of the treatment liquid is continuously removed from the first bath. The flow direction of the treatment liquid from bath to bath is opposite to the transport direction of the contact lenses. Thus, the preceding baths are always replenished with a treatment liquid which is less burdened e.g. with extraction substances, and is less diluted with water. Being transported from bath to bath the contact lenses are immersed in treatment liquids which are burdened less and less e.g. with extraction substances and are less and less diluted until they reach the last bath, in which the contact lenses are confronted with an almost completely fresh treatment liquid. The amount of fresh treatment liquid to be added to the last bath is determined from concentration measurements in the last bath, which are performed in accordance with a predetermined schedule or permanently in-line. With these method steps it is possible to maintain the concentration of the treatment liquid baths with in specified ranges which are required for the desired treatment of the contact lenses.

In order to maintain the concentration of the treatment liquids in the baths within the specified ranges the concentration of a specific substance in the treatment liquid itself can be measured. Survey shows, that the concentration of the treatment liquid in the baths can also be controlled by a measurement of the water concentration. The measured dilution with water is a direct indicator for the volume of fresh treatment liquid which must be added to the last bath. Thus, in accordance with the measured water concentration the flow rate of added treatment liquid is controlled.

It proves advantageous to measure the water concentration directly in the last bath of the arrangement of successive baths. By controlling the dilution in the last bath only, the dilution and thus the concentration of the treatment liquid in the preceding baths is automatically controlled and may be kept within specified ranges.

The level of the treatment liquid in the first bath may be controlled by flow control means and a respective suction pump and like means. A very simple method to control the level of the treatment liquid and keep the level essentially constant within the first bath is to have excess treatment liquid flow out of the fist bath through a liquid overflow.

The transport of the treatment liquid from a bath to the preceding bath is very simply accomplished via respective overflows. Thereby the level of treatment liquid in the individual baths is automatically controlled.

In order to accomplish a thorough mixing of the original treatment liquid in a bath with the added new or less diluted treatment liquid it is advantageous to provide for an agitation of the treatment liquid. This can be accomplished e.g. with an automatic stirrer. In an embodiment of the invention the agitation of the treatment liquid in a bath may be achieved by a respective motion of the containers in which the lenses are individually accommodated when they are immersed in the treatment liquid.

The most of the water from the rinsing bath and, e.g. in case of an extraction process, the highest amounts of extraction substances are added to the treatment liquid contained in the first one of an arrangement of successive baths. For a better control of the dilution as well as of any contamination it proves advantageous, to keep the volume of the treatment liquid in the first bath rather low. Therefore, the first bath of the arrangement of baths contains the smallest volume of treatment liquid. This could be achieved e.g. by having a filling level in the first bath which is distinct from that of the other baths and by correspondingly arranging the overflow at a lower level of the bath. In order to maintain a simple transportation of the contact lenses from bath to bath and across each bath, and in order to ascertain a thorough immersion of the lenses in the treatment liquid, though, it proves advantageous to keep the filling levels at an essentially constant height in all baths. Therefore, the first bath is selected to be of the smallest size of the arrangement of baths.

In particular in cases where the treatment of the lenses occurs at a temperature level above that of room temperature it proves advantageous to control the temperatures of the treatment liquid baths and to maintain the temperature at an essentially constant level.

While the transition from on large batch bath with treatment liquid to an arrangement with two successive baths already brings considerable improvements concerning contaminations and dilution, it proves advantageous if the arrangement comprises at least three successive baths with treatment liquid. In the first bath after the bath with rinsing water most of the water is introduced and most of the contamination due e.g. to substances extracted from the lenses occurs. In the second bath both, the contamination and the dilution are already considerably reduced. Finally in the third and last bath the treatment liquid is only slightly affected from spread water and extracted substances. Further embodiments of the invention comprise more than three successive baths with treatment liquid, such as, e.g. three to nine baths.

The method of maintaining the concentration of treatment liquid baths within specified levels is particularly suited for application in contact lens production processes, in which the contact lenses must be extracted, and/or rinsed, and/or coated. Correspondingly the treatment liquid is one of an extraction liquid, a rinsing liquid, and a coating liquid.

In accordance with another aspect of the present invention, a treatment station for contact lenses is provided. The treatment station may be used to provide treatments such as, e.g., an extraction station, a special rinsing station, in which the contact lenses are immersed in special chemicals, a coating station, etc., comprises an arrangement of at least three successive baths, wherein each bath contains the same treatment liquid. The successively arranged baths are interconnected with each other such, that excess treatment liquid may flow from one bath to a respective preceding bath. In the last one of the successive baths a concentration sensor is provided, which is connected with a control center for evaluating the measured concentrations and for determining a required amount of fresh treatment liquid. The control center then controls a continuous influx of fresh treatment liquid into the last one of the arrangement of successive baths. The first one of the arrangement of successive baths is provided with an outlet for an excess amount of treatment liquid. The treatment station in accordance with the invention allows a simple and effective control and maintenance of the concentrations of the treatment liquids in the respective baths within specified ranges. Excess treatment liquid flow from one bath to the preceding bath. At the first one of the arrangement of successive baths excess treatment liquid is removed through an outlet. This design allows an effective control also of the liquid level in the individual baths, which level preferably is kept essentially the same in each bath.

For a very simple and effective control the concentration sensor is adapted for continuously or periodically measuring a water concentration in the treatment liquid contained in the last bath.

### DETAILED DESCRIPTION

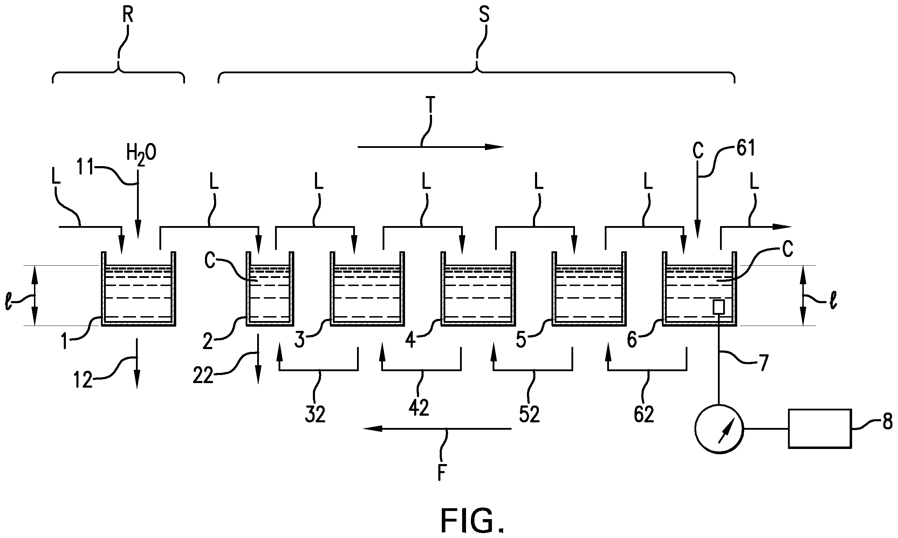

The method and the device for maintaining the concentration of a treatment liquid or treatment solution bath and still further advantages thereof will become apparent from the following description of an exemplary arrangement in accordance with the invention, reference being made to the schematic drawing in Figure 1.

In Figure 1 a process stage in the manufacture of contact lenses L is schematically depicted, which comprises a rinsing station R and a treatment station S. The treatment station can be, e.g., an extraction station, in which substances are extracted from the lens material using specific treatment liquids, or a coating station, or another rinsing station, in which the lenses are rinsed with specific chemicals, etc. The rinsing station R basically is comprised of a rinsing bath 1 containing deionised water. The water is continuously supplied by a feed line 11 and removed through an outlet line 12. The outlet line 12 can be designed simply as a liquid overflow, such that an essentially constant liquid level I may be maintained in the rinsing bath 1. Immediately following the rinsing station R there is arranged a treatment station S for the contact lenses L. The treatment station S is comprised of a number of successive baths 2, 3, 4, 5, and 6, in which the same treatment liquid C is contained. The treatment liquid C may be, e.g., an extraction liquid or solution, a rinsing liquid or solution, a coating liquid or solution and the like.

The contact lenses L, coming from a preceding production stage are first dipped into the rinsing bath 1, in which they are completely immersed. For the purpose of dipping and immersing the contact lenses L in various baths, the lenses L usually are accommodated individually in containers, which themselves are held in carriers. The specific transport means are not subject of this invention, and therefore it is abstained from providing a detailed description thereof. From the rinsing bath 1 the contact lenses L are transported to the first bath 2 of the treatment station S, e.g. an extraction station. Water adhering to the surfaces of the contact lenses L and still contained in the transport containers is spread into the treatment liquid C which is contained in the first bath 2 and therefore somewhat dilutes the treatment liquid. Having passed the full length of the first bath 1, the contact lenses L are transported to the second bath 3 and dipped into and immersed in the treatment liquid C contained therein. Together with the contact lenses L in their transport containers a certain amount of already diluted treatment liquid C from the first bath 1 is spread into the treatment liquid contained in the second bath and dilutes it. With the transport of the lenses L from bath to bath, a certain amount of the diluted treatment liquid C is spread into the treatment liquid in the successive bath, thus, altering the concentration of the treatment liquid.

In extraction stages a major portion of extracted substances occurs already in the first bath 2. Thus, the treatment liquid in the first bath 2 is "contaminated" with the largest amount of extracted substances. From the first bath 2 the "contaminations" are transported, together with the already diluted treatment liquid to the successive bath 3 and so on. Thus, aside from spread water also a certain amount of extracted substances is spread into the successive baths and may be even found in the treatment liquid C contained in last bath 6 of the arrangement of successive baths 2 - 6 in the treatment station S.

While the transition from one single batch bath with treatment liquid to an arrangement of successive baths 2 - 6 already reduces the problem of dilution and "contamination", it has been found that the concentration of the treatment liquid C contained in the respective baths 2 - 6 can be controlled and maintained within specified ranges even better, if the concentration of water is measured in the treatment liquid contained in the last bath 6, and if, depending on the measured concentration values a certain amount of fresh treatment liquid C is continuously added to that contained in the last bath 6. For that purpose the last bath is equipped with a concentration sensor 7 for water. The continuously or according to a schedule periodically measured values are digitized and forwarded to a control center 8, in which the necessary amount of fresh treatment liquid C is determined. The control center 8 then controls the continuous flow of fresh treatment liquid C which is added to the last bath 6 through an inlet 61.

From the last bath 6, a certain amount of treatment liquid C flows to the preceding baths, thus ensuring that the liquid levels I in the individual baths 2, 3, 4, 5, 6 remain at essentially the same height in all baths. The flow of the treatment liquid C from one bath to the preceding bath is indicated in the Figure by the arrows 62, 52, 42, and 32, respectively. Thus, the continuous flow F of the treatment liquid C occurs a direction which is opposite to the direction of the transport T of the contact lenses L through the successive baths 2 - 6. The transport of the treatment liquid C from on bath to the preceding bath may be accomplished with the aid of pumps. In a simple embodiment of the invention the excess treatment liquid C of one bath flows into the preceding bath through a liquid overflow. In order to maintain the liquid level I essentially constant in all baths treatment liquid C is continuously removed through an outlet 22 from the first bath 2 of the arrangement of successive treatment baths 2 - 6. In a simple embodiment the outlet 22 of the first bath 2 may also be designed as a liquid overflow.

It has already been mentioned above, that e.g. in extraction processes for contact lenses the major portion of extracted substances arises in the first one 2 of the arrangement of successive baths 2 - 6. Also, most of the water transported by the lenses and their containers is spread into the first bath 2. It proves advantageous therefore, to make the first bath 2 smaller in volume than the successive baths 3 - 6.

## Claims

1. Method for maintaining the concentration of a treatment liquid bath in the production process for contact lenses (L), comprising the steps of immersing the lens (L) in an arrangement of two or more successive treatment liquid baths (2 - 6) of the same kind in a treatment station (S), with the treatment liquids (C) in the successive baths (2 - 6) being continuously renewed and being transported from one bath (6-3) to the preceding bath (5-2) in a direction (F) opposite to a transport direction (T) of the contact lenses (L) from bath to bath, a metered volume of treatment liquid (C) being continuously introduced into the last bath (6) of the arrangement of treatment liquid baths (2 - 6), and a specified volume of treatment liquid being continuously removed from the first bath (2), **characterized by** rinsing each lens (L) in a water bath (1) immediately prior to immersing the lens (L) in the arrangement of two or more successive treatment liquid baths (2-6), and by continuously introducing the treatment liquid (C) into the last bath (6) of the arrangement of treatment liquid baths (2-6) in dependency of a measured concentration, wherein the concentration measured is the water concentration in the treatment liquid (C), and wherein the water concentration is measured in the last bath (6) of the arrangement of successive baths (2-6).

2. Method according to claim 1, wherein the treatment liquid (C) is removed from the first bath (2) through a liquid overflow.

3. Method according to claim 1 or 2, wherein the treatment liquid is automatically transported from one bath (6-3) to the preceding bath (5-2) through respective overflows.

4. Method according to any one of the preceding claims, wherein the treatment liquids (C) in the individual baths are agitated.

5. Method according to any one of the preceding claims, wherein the first bath (2) of the arrangement of baths (2-6) contains the smallest volume of treatment liquid (C).

6. Method according to any one of the preceding claims, wherein the first bath (2) is selected to be of the smallest size of the arrangement of baths (2-6).

7. Method according to any one of the preceding claims, wherein the filling levels in the individual baths are kept at the same height.

8. Method according to any one of the preceding claims, wherein the temperature of the treatment liquid baths is controlled and preferably kept at an constant level.

9. Method according to any one of the preceding claims, wherein after rinsing in the water bath (1) the lenses are transported through an arrangement of at least three succeeding baths with treatment liquid (C).

10. Method according to any one of the preceding claims, wherein the treatment liquid (C) is an extraction liquid.

11. Process stage in the manufacture of contact lenses (L), comprising a rinsing station (R) and a treatment station (S), the rinsing station (R) comprising a water bath (1), and the treatment station (S) comprising an arrangement of at least three successive baths (2-6), each bath (2-6) containing a treatment liquid (C) of the same kind, which successive baths are interconnected with each other such that excess treatment liquid may flow from one bath (6-3) to a respective preceding bath (5-2) with a continuous influx of fresh treatment liquid (C) into the last one (6) of the arrangement of successive baths (6), the first one (2) of the arrangement of successive baths (2-6) being provided with an outlet (22) for an excess amount of treatment liquid, **characterized by** a concentration sensor (7) provided in the last one (6) of the arrangement of successive baths (2-6) containing the treatment liquid (C), which sensor (7) is connected with a control center (8) for evaluating the measured concentrations, for determining a required amount of fresh treatment liquid (C) and for controlling the continuous influx thereof into the last one (6) of the arrangement of successive baths (2-6), wherein the concentration sensor (7) is adapted for measuring a water concentration in the treatment liquid (C) contained in the last bath (6).

12. Process stage according to claim 11, wherein the concentration sensor (7) is adapted for continuously or periodically measuring the water concentration in the treatment liquid (C) contained in the last bath (6).

13. Process stage according to any one of claims 11 or 12, wherein the treatment liquid (C) is an extraction liquid.

## Patentansprüche

1. Verfahren zum Aufrechterhalten der Konzentration eines Behandlungsflüssigkeitsbads bei dem Herstellungsverfahren für Kontaktlinsen (L), umfassend die Schritte des Eintauchens der Linse (L) in eine Anordnung von zwei oder mehr aufeinanderfolgenden Behandlungsflüssigkeitsbädern (2-6) der gleichen Art in einer Behandlungsstation (S), wobei die Behandlungsflüssigkeiten (C) in den aufeinanderfolgenden Bädern (2-6) kontinuierlich erneuert werden und in einer Richtung (F), die der Beförderungsrichtung (T) der Kontaktlinsen (L) von Bad zu Bad entgegengesetzt ist, von einem Bad (6-3) zu dem vorangehenden Bad (5-2) befördert werden, wobei in das letzte Bad (6) der Anordnung von Behandlungsflüssigkeitsbädern (2-6) kontinuierlich ein dosiertes Volumen an Behandlungsflüssigkeit (C) zugeführt wird und aus dem ersten Bad (2) kontinuierlich ein vorgegebenes Volumen an Behandlungsflüssigkeit entfernt wird, **gekennzeichnet durch** Spülen jeder Linse (L) in einem Wasserbad (1) unmittelbar vor dem Eintauchen der Linse (L) in die Anordnung von zwei oder mehr aufeinanderfolgenden Behandlungsflüssigkeitsbädern (2-6), und durch kontinuierliches Einführen der Behandlungsflüssigkeit (C) in das letzte Bad (6) der Anordnung von Behandlungsflüssigkeitsbädern (2-6) abhängig von einer gemessenen Konzentration, wobei die gemessene Konzentration die Wasserkonzentration in der Behandlungsflüssigkeit (C) ist, und wobei die Wasserkonzentration in dem letzten Bad (6) der Anordnung von aufeinanderfolgenden Bädern (2-6) gemessen wird.

2. Verfahren gemäß Anspruch 1, wobei die Behandlungsflüssigkeit (C) durch einen Flüssigkeitsüberlauf aus dem ersten Bad (2) entfernt wird.

3. Verfahren gemäß Anspruch 1 oder 2, wobei die Behandlungsflüssigkeit durch entsprechende Überläufe automatisch von einem Bad (6-3) zu dem vorangehenden Bad (5-2) befördert wird.

4. Verfahren gemäß einem der vorangehenden Ansprüche, wobei die Behandlungsflüssigkeiten (C) in den einzelnen Bädern bewegt werden.

5. Verfahren gemäß einem der vorangehenden Ansprüche, wobei das erste Bad (2) der Anordnung von Bädern (2-6) das kleinste Volumen an Behandlungsflüssigkeit (C) enthält.

6. Verfahren gemäß einem der vorangehenden Ansprüche, wobei das erste Bad (2) ausgewählt ist, die kleinste Größe der Anordnung von Bädern (2-6) aufzuweisen.

7. Verfahren gemäß einem der vorangehenden Ansprüche, wobei die Füllstände in den einzelnen Bädern auf der gleichen Höhe gehalten werden.

8. Verfahren gemäß einem der vorangehenden Ansprüche, wobei die Temperatur der Behandlungsflüssigkeitsbäder gesteuert wird und vorzugsweise auf einem konstanten Wert gehalten wird.

9. Verfahren gemäß einem der vorangehenden Ansprüche, wobei nach dem Spülen in dem Wasserbad (1) die Linsen durch eine Anordnung von wenigstens drei aufeinanderfolgenden Bädern mit Behandlungsflüssigkeit (C) geführt werden.

10. Verfahren gemäß einem der vorangehenden Ansprüche, wobei die Behandlungsflüssigkeit (C) eine Extraktionsflüssigkeit ist.

11. Prozessstufe bei der Herstellung von Kontaktlinsen (L), umfassend eine Spülstation (R) und eine Behandlungsstation (S), wobei die Spülstation (R) ein Wasserbad (1) umfasst und die Behandlungsstation (S) eine Anordnung von wenigstens drei aufeinanderfolgenden Bädern (2-6) umfasst, wobei jedes Bad (6) eine Behandlungsflüssigkeit (C) der gleichen Art enthält, wobei aufeinanderfolgende Bäder derart miteinander verbunden sind, dass überschüssige Behandlungsflüssigkeit von einem Bad (6-3) zu einem entsprechenden vorangehenden Bad (5-2) fließen kann, wobei ein kontinuierlicher Zufluss von frischer Behandlungsflüssigkeit (C) in das letzte (6) der Anordnung von aufeinanderfolgenden Bädern (2-6) vorliegt, wobei das erste (2) der Anordnung von aufeinanderfolgenden Bädern (2-6) mit einem Auslass (22) für eine überschüssige Menge an Behandlungsflüssigkeit ausgestattet ist, **gekennzeichnet durch** einen Konzentrationssensor (7), der in dem letzten (6) der Anordnung von aufeinanderfolgenden Bädern (2-6), die die Behandlungsflüssigkeit (C) enthalten, vorgesehen ist, welcher Sensor (7) mit einem Regelzentrum (8) zum Auswerten der gemessenen Konzentrationen verbunden ist, um eine benötigte Menge an frischer Behandlungsflüssigkeit (C) zu bestimmen und deren kontinuierlichen Zufluss in das letzte (6) der Anordnung von aufeinanderfolgenden Bädern (2-6) zu regeln, wobei der Konzentrationssensor (7) dazu ausgelegt ist, die Wasserkonzentration in der Behandlungsflüssigkeit (C), die in dem letzten Bad (6) enthalten ist, zu messen.

12. Pozessstufe gemäß Anspruch 11, wobei der Konzentrationssensor (7) dazu ausgelegt ist, die Wasserkonzentration in der Behandlungsflüssigkeit (C), die in dem letzten Bad (6) enthalten ist, kontinuierlich oder periodisch zu messen.

13. Prozessstufe gemäß einem der Ansprüche 11 oder 12, wobei die Behandlungsflüssigkeit (C) eine Extraktionsflüssigkeit ist.

## Revendications

1. Procédé pour maintenir la concentration d'un bain de liquide de traitement dans le processus de production pour des lentilles de contact (L), comportant les étapes consistant à immerger la lentille (L) dans un agencement de deux bains successifs (2 à 6) de liquide de traitement ou plus du même type dans une station de traitement (S), les liquides de traitement (C) dans les bains successifs (2 à 6) étant renouvelés en continu et étant transportés depuis un bain (6 à 3) vers le bain précédent (5 à 2) dans une direction (F) opposée à une direction de transport (T) des lentilles de contact (L) d'un bain à l'autre, un volume dosé de liquide de traitement (C) étant introduit en continu dans le dernier bain (6) de l'agencement de bains (2 à 6) de liquide de traitement, et un volume spécifié de liquide de traitement étant retiré en continu du premier bain (2), **caractérisé par** le rinçage de chaque lentille (L) dans un bain d'eau (1) immédiatement avant l'immersion de la lentille (L) dans l'agencement de deux bains successifs (2 à 6) de liquide de traitement ou plus, et par l'introduction en continu du liquide de traitement (C) dans le dernier bain (6) de l'agencement de bains (2 à 6) de liquide de traitement en fonction d'une concentration mesurée, dans lequel la concentration mesurée est la concentration en eau dans le liquide de traitement (C), et dans lequel la concentration en eau est mesurée dans le dernier bain (6) de l'agencement de bains successifs (2 à 6).

2. Procédé selon la revendication 1, dans lequel le liquide de traitement (C) est retiré du premier bain (2) par l'intermédiaire d'un débordement de liquide.

3. Procédé selon la revendication 1 ou 2, dans lequel le liquide de traitement est automatiquement transporté depuis un bain (6 à 3) vers le bain précédent (5 à 2) par le biais de débordements respectifs.

4. Procédé selon l'une quelconque des revendications précédentes, dans lequel les liquides de traitement (C) dans les bains individuels sont agités.

5. Procédé selon l'une quelconque des revendications précédentes, dans lequel le premier bain (2) de l'agencement de bains (2 à 6) contient le plus petit volume de liquide de traitement (C).

6. Procédé selon l'une quelconque des revendications précédentes, dans lequel le premier bain (2) est sélectionné pour avoir la plus petite taille de l'agencement de bains (2 à 6).

7. Procédé selon l'une quelconque des revendications précédentes, dans lequel les niveaux de remplissage dans les bains individuels sont maintenus à la même hauteur.

8. Procédé selon l'une quelconque des revendications précédentes, dans lequel la température des bains de liquide de traitement est régulée et de préférence maintenue à un niveau constant.

9. Procédé selon l'une quelconque des revendications précédentes, dans lequel après un rinçage dans le bain d'eau (1), les lentilles sont transportées à travers un agencement d'au moins trois bains successifs comportant un liquide de traitement (C).

10. Procédé selon l'une quelconque des revendications précédentes, dans lequel le liquide de traitement (C) est un liquide d'extraction.

11. Étage de processus dans la fabrication de lentilles de contact (L), comprenant une station de rinçage (R) et une station de traitement (S), la station de rinçage (R) comprenant un bain d'eau (1), et la station de traitement (S) comprenant un agencement d'au moins trois bains successifs (2 à 6), chaque bain (2 à 6) contenant un liquide de traitement (C) du même type, lesquels bains successifs sont interconnectés entre eux de sorte qu'un excédent de liquide de traitement puisse s'écouler d'un bain (6 à 3) à un bain précédent (5 à 2) respectif avec un flux entrant continu de liquide de traitement (C) frais dans le dernier bain (6) de l'agencement de bains successifs (6), le premier bain (2) de l'agencement de bains successifs (2 à 6) étant doté d'une évacuation (22) pour une quantité excédentaire de liquide de traitement, **caractérisé par** un capteur de concentration (7) prévu dans le dernier bain (6) de l'agencement de bains successifs (2 à 6) contenant le liquide de traitement (C), lequel capteur (7) est connecté à un centre de commande (8) pour évaluer les concentrations mesurées, pour déterminer une quantité requise de liquide de traitement (C) frais et pour commander le flux entrant continu de celui-ci dans le dernier bain (6) de l'agencement de bains successifs (2 à 6), dans lequel le capteur de concentration (7) est conçu pour mesurer une concentration en eau dans le liquide de traitement (C) contenu dans le dernier bain (6).

12. Étage de processus selon la revendication 11, dans lequel le capteur de concentration (7) est conçu pour mesurer en continu ou périodiquement la concentration en eau dans le liquide de traitement (C) contenu dans le dernier bain (6).

13. Étage de processus selon l'une quelconque des revendications 11 ou 12, dans lequel le liquide de traitement (C) est un liquide d'extraction.
